# EUROPEAN PATENT SPECIFICATION

(11) **EP 1 602 888 B1**
(45) Date of publication and mention of the grant of the patent: **21.12.2011**
(21) Application number: 05014462.5
(22) Date of filing: 19.10.1999
(51) Int. Cl.: F26B 5/08, F26B 17/24

(54) **CENTRIFUGAL PELLET DRYER**
GRANULATSCHLEUDERTROCKNER.
DESSICATEUR CENTRIFUGE DE GRANULES

(30) Priority: 19.10.1998 US 174600
(43) Date of publication of application: 07.12.2005
(62) Divisional of application: 99955044.5
(73) Proprietor: Gala Industries, Inc., Eagle Rock, VA 24085 (US)
(72) Inventor: Bryan, David E., Buchanan VA 24066 (US); Dudding, Carl M., Eagle Rock VA 24085 (US)
(74) Representative: Thoma, Michael

(56) References cited:
- WO-A2-97/41290
- DE-A1- 3 120 792
- FR-A- 1 432 125
- US-A- 4 476 019
- US-A- 4 570 359
- US-A- 4 896 435
- US-A- 5 265 347
- US-A- 5 638 606

## Description

### BACKGROUND OF THE INVENTION

### Field of the Invention

The present invention generally relates to a centrifugal dryer for removing surface moisture from pellets of resin material having a diameter generally ranging between approx. 0.381 mm to approx. 6.35 mm (approx. 0.015 to approx. 0.25 inches) received from an underwater pelletizer. In one embodiment of the present invention, the dryer is constructed with smaller dimensions enabling it to effectively operate at low volume rates and be easily assembled and disassembled to facilitate cleaning and replacement or interchange of components with its overall size enabling it to be effectively used in small applications. In other embodiments of the present invention, the dryer is constructed with larger dimensions enabling it to effectively operate at high volume rates for use in commercial applications.

### Description of the Prior Art

Centrifugal pellet dryers are well known and have been successfully used for many years to separate water from a water and pellet slurry and remove surface moisture from the pellets in order to provide relatively dry surfaces on the pellets for subsequent use. The following U.S. patents, owned by the assignee of this application, relate to centrifugal pellet dryers:

| | | |
|---|---|---|
| 3,458,045 | 4,896,435 | 5,265,347 |
| 4,218,323 | 5,197,205 | 5,638,606 |
| 4,565,015 | | |

The following U.S. patents also relate to centrifugal pellet dryers:

| | | |
|---|---|---|
| 4,476,019 | 5,187,880 | 5,611,150 |
| 4,570,359 | 5,505,537 | |

The pellet dryers of the prior art do not have a sectional housing with upper and lower (base) sections being connected together by bolted external flanges for easy separation and access to the internal components. The prior art also fails to disclose the use of swing bolts to secure the housing sections together and does not disclose a depending extension on the upper housing below the flange thereon to engage the interior of the base section to provide a gasket free seal between the housing sections. The prior art also does not disclose a pellet dryer including a housing base section supported from a pivotal portion of the top of a water collecting tank to facilitate access to an underside of the base section and an inclined fines separation screen underlying the pivotal portion of the tank top in which a lower edge of the inclined fines separation screen discharges into a screened separation tray externally of the tank. In addition, the prior art does not disclose a centrifugal pellet dryer in which the rotor is supported from a single upper bearing and the lower end of the rotor is rotatably guided by an alignment bushing in the housing base section which is self-lubricating and cooled by the water of the water and pellet slurry thereby eliminating the need for providing a sealed bearing or other special device to protect a bottom bearing from the water.

Another feature not shown in the prior art is the use of a cylindrical screen in a centrifugal pellet dryer which telescopically engages a recessed edge of cup-shaped support members at the top and bottom ends of the screen and is supported by a pair of holding clips in the form of hooks to engage supporting pins on the upper cup-shaped support. Also, the prior art does not disclose the use of a lift device to assist in lifting and supporting major components away from the base section and to permit the supported components to be swung about a vertical axis away from alignment with the base section and tank to facilitate removal, cleaning and replacement of the dryer components. The prior art also fails to disclose a pellet dryer having an air circulating fan communicated with an upper end of the dryer for circulating air upwardly through the dryer for discharge laterally and upwardly to facilitate drying of the pellets. Further, the prior art does not disclose a structure on the underside of the pivotal portion of the water tank top to guide the fines and water toward an upper edge portion of the inclined fines screen.

Furthermore, DE 31 20 792 A1 discloses a pellet dryer with a rotor having diameter increasing towards the top of the rotor. The cylindrical housing surrounding said rotor is closed by a top plate, however, the housing itself has no base section and upper section separable from each other.

Moreover, WO 97/41290 discloses a centrifugal dryer for pellets with a housing having a reservoir section and a dryer section hingedly attached to the reservoir section to facilitate cleaning of the dryer section. Neither the screen nor the rotor of said dryer extend into the said reservoir section. The rotor is completely received within the dryer section which in turn has no base section and upper section separable from each other.

Accordingly, it is an objective of the present invention to provide an improved centrifugal pellet dryer which enables quick and easy assembly and disassembly of the housing and consequently easy maintenance of the rotor.

This objective is achieved in accordance with the present invention by a dryer as defined in claim 1. Preferred embodiments of the invention are laid down in the dependent claims.

### SUMMARY OF THE INVENTION

The centrifugal pellet dryer is particularly suitable for removing surface moisture from resin pellets (approx. 0.381 mm to approx. 6.35 mm (approx. 0.015 to approx. 0.25 inches) in diameter) and in one embodiment is specifically adapted for low volume use in laboratory applications and in other embodiments is specifically adapted for high volume use in commercial applications.

The centrifugal pellet dryer of this invention includes a sectional housing having separable sections that are quickly and easily connected together and disconnected from each other. The separable sections are preferably cylindrical top and base sections connected by mating external peripheral flanges that are bolted together by conventional bolts or swing bolts. The base section is mounted on a top wall of a water collecting or drain tank into which the water from the water and pellet slurry is drained, thereby eliminating the necessity of providing any piping system to remove the water from the dryer once separated from the pellets.

The centrifugal pellet dryer of this invention also includes a driven rotor that has a single supporting bearing at the upper end thereof with only an alignment bushing assembly at its lower end. A motor is preferably mounted atop a top plate to which the upper housing section is attached. The rotor supporting bearing is preferably mounted to the top plate and the alignment bushing assembly is preferably part of the lower or base section of the housing. This structure eliminates the necessity of providing a bottom bearing for the rotor and a sealing arrangement for the bottom bearing to preclude water from entering the bottom bearing thereby simplifying the structure. It also facilitates the easy separation and assembly of the top and base sections relative to each other.

Further, the centrifugal pellet dryer of this invention includes a lift and support device to lift the motor, rotor, top plate and upper housing section upwardly away from the lower or base section of the housing which allows the lifted components to be swung about a vertical axis away from the base section. This lifting, supporting and swinging structure may be in the form of a gas spring or a manually actuated jacking device and enables removal of the upper section of the housing and screen to facilitate cleaning of the exposed bladed rotor as it remains connected to its driving shaft.

The centrifugal pellet dryer of this invention also preferably includes a cylindrical one-piece screen which is telescopically engaged with recessed end edges on top and bottom cup-like support structures. The screen also includes support hooks engaging the top support structure to removably support the screen within the top and base sections of the housing to facilitate assembly and disassembly of the screen in the dryer. Additionally, the tank includes a fines screen receiving water from the base section of the dryer for removing any solid material, partial pellets or fines which may be entrained in the water.

The pellet dryer of this invention also preferably includes a pivotal portion on the top of the water collecting or drain tank which supports the base section of the housing to provide access to an inclined fines screen in the tank, which screen has a lower edge extending outwardly of the tank to deposit separated material into a screened external tray.

The pellet dryer of this invention also can include a structure on the underside of the pivotal portion of the top of the water receiving tank to direct the water and fines toward an upper edge of the inclined fines screen.

The pellet dryer of the present invention also preferably includes a fan above the upper end of the housing and communicated with the interior thereof for circulating air upwardly through the housing and for discharge of the air laterally in relation to the housing.

According to a preferred embodiment, the present invention provides a centrifugal pellet dryer for removing surface moisture from pelletized product which includes a sectional housing in which multiple sections are connected by external flanges that are bolted together to enable quick and easy assembly and disassembly of the housing.

Another preferred embodiment provides a pellet dryer in which the rotor is rigid with a shaft supported by a single upper bearing and having an alignment bushing assembly guiding rotation of the lower end of the rotor thereby eliminating the need for a sealing device or special waterproof design to protect a bottom bearing from water within the dryer.

A further preferred embodiment provides a centrifugal pellet dryer for laboratory applications in which the dryer is capable of operation at very low volume rates and is constructed of a relatively small overall size and of separable and replaceable components rendering it easily cleanable, repairable and otherwise well suited for laboratory or small applications.

An additional embodiment provides a pellet dryer for commercial applications in which the dryer is capable of operation at very high volume rates and is constructed of a relatively larger size.

A still further embodiment of the invention provides a lift for supporting and lifting the motor, the rotor and the upper housing section away from the housing base section when the dryer is being disassembled for repair and cleaning.

Still another embodiment of the present invention provides a pellet dryer including a one-piece cylindrical screen having upper and lower edges telescopically engaged with recessed edges of top and bottom cup-like supports in the housing and support hooks engaging with support pins on the top support.

Yet another embodiment of the present invention provides a centrifugal pellet dryer in which a base section of the housing is mounted directly on a top wall of the water drain tank so that water removed from the water and pellet slurry in the dryer can pass directly from the base section of the dryer housing into the water drain tank thereby eliminating the necessity of providing a piping system to drain water from the dryer.

A still further embodiment of this invention provides a pellet dryer in which the underside of the pivotal portion of the water drain tank includes a structure to direct water and fines toward the upper end portion of the screen.

An additional embodiment of the invention provides a centrifugal pellet dryer in which a fan is provided at the upper end of the housing for circulating air upwardly through the housing for discharge laterally of the dryer adjacent the upper end thereof.

A final embodiment of the invention provides a pellet dryer which will conform to conventional forms of manufacture, be of simple construction and easy to use so as to provide a dryer that will be economically feasible, long lasting and relatively trouble free in operation.

These together with other objects and advantages which will become subsequently apparent reside in the details of construction and operation as more fully hereinafter described and claimed, reference being made to the accompanying drawings forming a part hereof, wherein like numerals refer to like parts throughout.

### BRIEF DESCRIPTION OF THE DRAWINGS

Figure 1 is a side elevational view of one embodiment of the centrifugal pellet dryer of the present invention illustrating the relationship of the motor, housing, drain tank, inlet and outlet and a lift device for an upper section of the housing, motor, rotor and screen.
Figure 2 is a side elevational view similar to Figure 1 but illustrating the base section of the housing detached from the remainder of the housing which has been lifted vertically away by the lift device.
Figure 3 is a side elevational view similar to Figure 2 but illustrating the swiveling movement of the lifted dryer components of the dryer and the dryer screen being removed from enclosing relation to the rotor.
Figure 4 is a side elevational view similar to Figure 3 and illustrating the upper section of the housing being removed to completely expose the rotor.
Figure 5 is a fragmental perspective view of the base section of the housing of the present invention and the components of the lower end portions of the rotor and screen associated therewith.
Figure 6 is a vertical partial sectional view, on an enlarged scale, of the dryer of the present invention illustrating the association of the components of the dryer.
Figure 7 is a fragmental enlarged elevational view of a portion of the housing illustrating a preferred form of bolted flange arrangement utilizing swing bolts.
Figure 8 is a fragmental enlarged sectional view of a preferred form of guide bushing assembly for the lower end of the rotor.
Figure 9 is a side elevational view of another embodiment of the centrifugal pellet dryer of the present invention illustrating the relationship of the motor, housing, drain tank, slurry inlet and dried pellet outlet.
Figure 10 is a side elevational view similar to Figure 9 but illustrating the upper section of the housing detached from the base section of the housing and lifted vertically by the lift device and swung to a position to enable the dryer screen to be removed from inside the housing upper section and from enclosing the rotor.
Figure 11 is a schematic perspective view of the sections of the housing, the lift device and water drain tank of the present invention with the motor and rotor swung away from the water tank, with the upper housing section and screen removed and with a portion of the top of the water drain tank and the base section thereon pivoted to an open position.
Figure 12 is a plan view of the base section of the dryer of the present invention mounted on a pivotal portion of the water drain tank top.
Figure 13 is a fragmental enlarged perspective view of the underneath side of the top of the water drain tank pivoted to an open position and the inclined fines screen in the top of the water tank.
Figure 14 is a fragmental perspective view of the fines screen and external fines screen tray on the drain tank.
Figure 15 is a detailed top plan view of the external fines screen tray on the water drain tank.
Figure 16 is a vertical sectional, on an enlarged scale, taken along section line 16-16 on Figure 15 illustrating structural details of the external fines screen tray.
Figure 17 is a side elevational view of another embodiment of the centrifugal pellet dryer of the present invention for use in a commercial application illustrating the association of the components with the water drain tank and the air circulation outlet associated with the upper end of the cylindrical housing.
Figure 18 is an end elevational view of the centrifugal pellet dryer of Figure 17 illustrating the hand operated mechanical lift device for the upper components of the dryer to enable them to be separated from a base section and lifted and swung about a vertical axis for access to the interior components of the dryer.
Figure 19 is a top plan view of the pellet dryer illustrated in Figure 17 and 18.
Figure 20 is a vertical sectional view, on an enlarged scale, of the dryer of Figures 17 and 18 illustrating the association of the air fan with the upper section of the housing and the air outlet associated with the housing and a gasket free seal between the lower end of the upper section of the housing and the base section thereof.
Figure 21 is a schematic end view of the water drain tank of the Figure 17 and 18 embodiment illustrating a baffle on the underside of the pivotal top portion of the tank for discharging water and fines onto the upper end of the inclined screen.
Figure 22 is a detailed plan view of the baffle illustrated in Figure 21 mounted on the underside of the pivotal tank portion.

### DESCRIPTION OF THE PREFERRED EMBODIMENTS

Although only preferred embodiments of the invention are explained in detail, it is to be understood that the invention is not limited in its scope to the details of construction and arrangement of components set forth in the following description or illustrated in the drawings. The invention is capable of other embodiments and of being practiced or carried out in various ways. Also, in describing the preferred embodiment, specific terminology will be resorted to for the sake of clarity. It is to be understood that each specific term includes all technical equivalents which operate in a similar manner to accomplish a similar purpose.

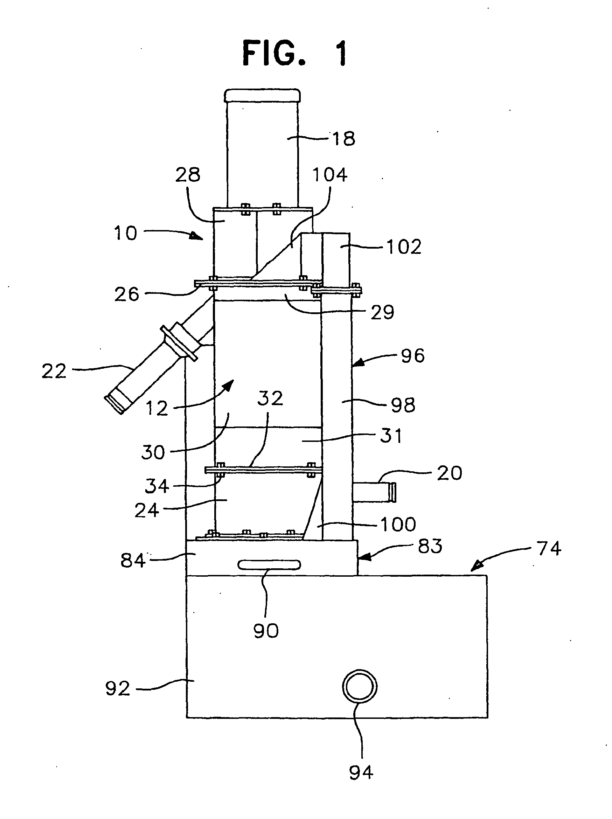

Referring now specifically to Figures 1-8 of the drawings, one embodiment of the centrifugal pellet dryer of the present invention is disclosed and generally designated by reference numeral 10 and includes a vertically disposed generally cylindrical housing generally designated by the numeral 12 having a vertical rotor 14 rotatably mounted therein and which is enclosed by a screen 16. The rotor 14 is driven by a motor 18 preferably mounted atop the upper end of the dryer. The lower end of the dryer includes a slurry inlet 20 and the upper end of the dryer includes a dried pellet outlet 22. These components generally are found in existing centrifugal pellet dryers. However, certain of the components of the present invention include unique structural features and associations not known in currently available centrifugal pellet dryers.

The housing 12 includes sections preferably including a base or lower section 24 and an elongated upper section 30 which is connected to a top plate 26. The upper section 30 can include reinforcing collars 29 and 31 at the upper and lower ends. The sections 24 and 30 and top plate 26 can be interconnected by circular end flanges 32 secured together by bolts 34. A coupling guard 28 is attached above top plate 26 as by bolts or the like. The housing sections 24 and 30 and top plate 26 are preferably constructed of a substantially rigid material, such as metal or plastic, that is sufficiently strong to support the structure of the dryer, is relatively inexpensive and can be constructed in relatively small diameters and heights.

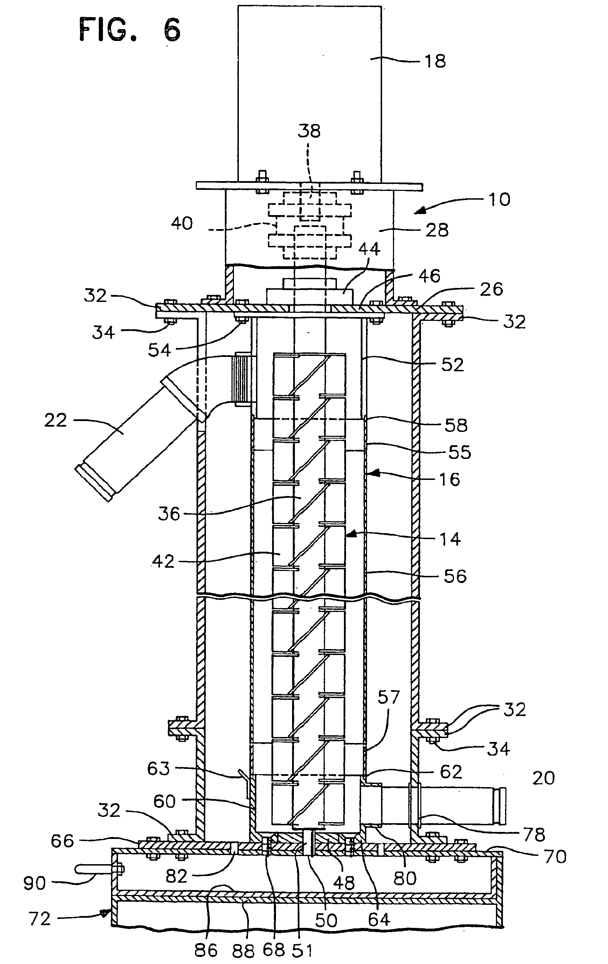

The rotor 14 includes a central shaft 36, preferably square, positioned centrally in the vertical housing 12 and is drivingly engaged with a motor output shaft 38 by a drive coupling 40 (see Figure 6). The upper end of the dryer rotor 14 is provided with a support bearing 44 enclosed within the motor coupling guard 28 and a motor support enclosed by the guard 28 which is supported from the top plate 26 at the upper end of the housing as indicated at reference numeral 46. The support bearing 44 supports the rotor 14 from its upper end and maintains its support in order that the lower end of the rotor shaft 36 can be guided by a bushing 48 mounted in the base section 24 of housing 12. The lower end of the shaft 36 is provided with an axially extending shaft 50 of reduced cross-sectional area and preferably of cylindrical configuration for rotational guided movement in cylindrical opening 51 in alignment bushing 48.

The upper section 30 of the housing 12 includes a downwardly extending cylindrical member 52 secured to the top plate 26 by fastening bolts 54. The screen 16 is a cylindrical member 56 of screen or perforated material which has an upper end in the form of a solid wall 55. The wall 55 engages with a downwardly facing recess 58 in the lower edge of the cylindrical member 52 with the upper end edge of the wall 55 on screen element 56 telescoping over the recess 58 as illustrated in Figure 6. Likewise, the lower end of the screen element 56 is supported by the top rim 61 of the upwardly facing cylindrical support 60. The top rim 61 includes a recessed upper edge 62 which telescopically receives the lower end of peripheral wall 57 of the screen element 56.

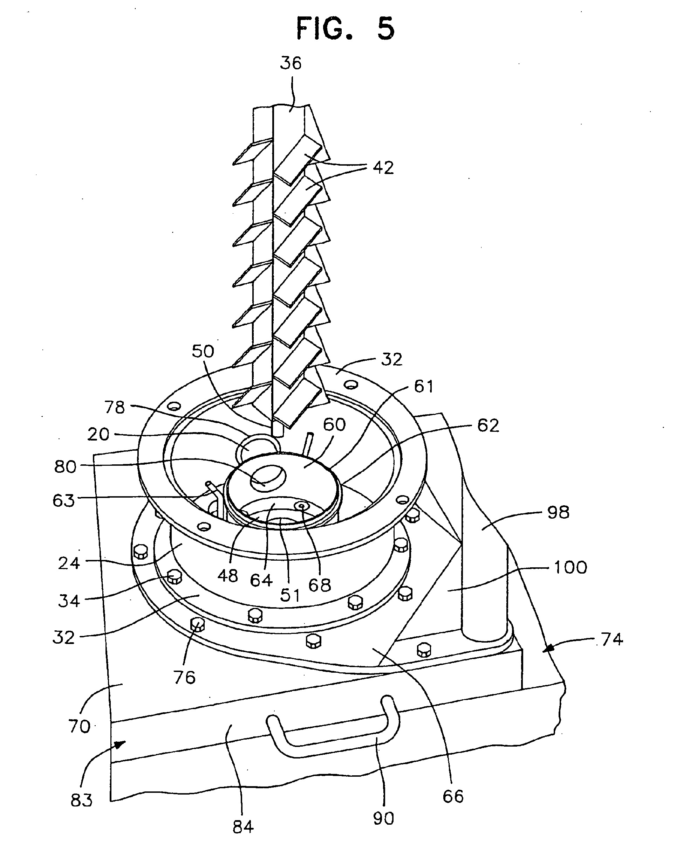

The cylindrical member 60 also preferably includes a plurality of upwardly and outwardly angled rods 63 on the exterior thereof as shown in Figures 5 and 6 to guide the lower end of the screen 16 onto the recess 62 formed on the outer edge of the upper end of cylindrical member 60. The angled rods 63 thus facilitate assembly of the screen element 56 onto cylindrical member 60 in relation to the housing and rotor. The lower cylindrical member 60 includes a bottom wall 64 that is secured to a plate 66 by fastening devices 68. The plate 66 is secured to the top wall 70 of a debris separating drawer assembly generally designated by reference numeral 72 positioned on top of a water drain tank generally designated by reference numeral 74 with fastening bolts 76 securing the plate 66 in position. It will be observed that alignment bushing 48 is preferably disk shaped and can be replaced if and when the opening 51 becomes worn. Bushing 48 is positioned in the center of bottom wall 64 so that extending shaft 50 and, therefore, rotor shaft 36 are both positioned substantially along the central vertical axis of the dryer 10 within screen 16 and housing 12.

The base section 24 of the housing 12 includes the inlet 20 which extends through a fitting 78 in the peripheral wall of the base section 24. The slurry inlet 20 extends into and is connected to a fitting 80 in the cylindrical member 60 thus communicating the slurry inlet 20 with the interior of the cylindrical member 60 and thus screen 16. This enables the rotor 14 to rotate and lift the slurry and pellets upwardly and directing them outwardly toward the screen element 56 so that water entrained with the pellets will be discharged through the screen. The water discharged through the screen and outwardly of the lower cylindrical member 60 can pass through the plate 66 and the top wall 70 through apertures 82 thus enabling the water to drain into the debris separating drawer assembly 72.

The separating drawer assembly 72 includes a slidable drawer 83 having a peripheral vertical wall 84 and a screen or perforated bottom 86. The drawer 83 is slidably supported on ledges 88 at the bottom of the drawer assembly 72. A handle 90 is provided at the front of the drawer 83 to move the drawer outwardly to remove any solids or pellets which may have been discharged through the apertures 82 so that only water is discharged into a water drain tank 92. The tank 92 is also provided with an opening 94 to facilitate discharge of water separated from the pellets.

As the pellets are moved upwardly in screen 16 by rotor 14 they are dried by virtue of the forces of gravity and the centrifugal force of the pellets being discharged toward the screen in a manner well known in the pellet drying art. Once the dried pellets reach the upper end of the rotor, they are discharged centrifugally into the dry pellet outlet 22 in communication with cylindrical member 52 and then into a suitable container.

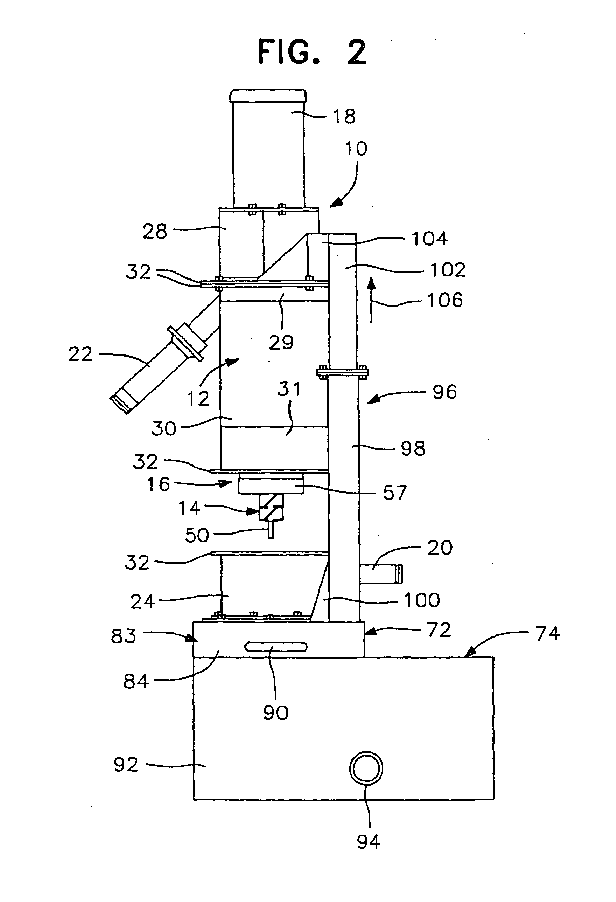

The upper section 30, the top plate 26, the coupling guard 28 and the motor 18 and its support along with the rotor 14 and screen 16 are all supported by a lifting device, preferably a gas spring lift device 96 in this embodiment. The gas spring lift device 96 includes a stationary outer tube 98 rigidly affixed to plate 66 on top wall 70 by bracket structure 100 and fastening bolts as shown in Figure 5. A swivelled vertically movable telescopic upper tube 102 is attached to the motor support and upper section 26 of the housing 12 by bracket structure 104. This gas spring 96 will assist in lifting and will support the upper section 30 of the housing 12 including the rotor, screen, motor support and motor when the bolts 34 interconnecting the flanges 32 between the upper section 30 and base section 24 of the housing are removed. The vertical movement of the upper tube 102 is illustrated in Figure 2 as indicated by the arrow 106.

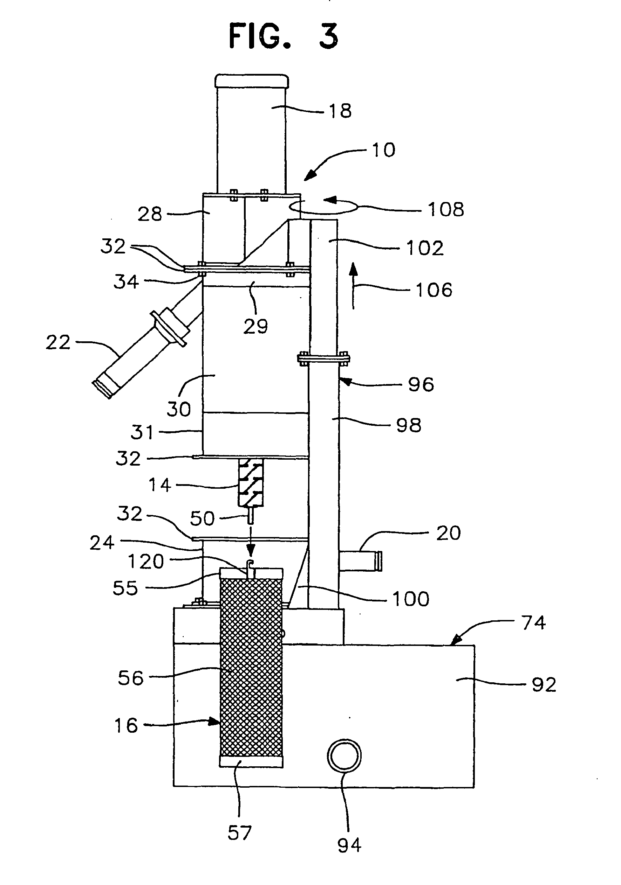

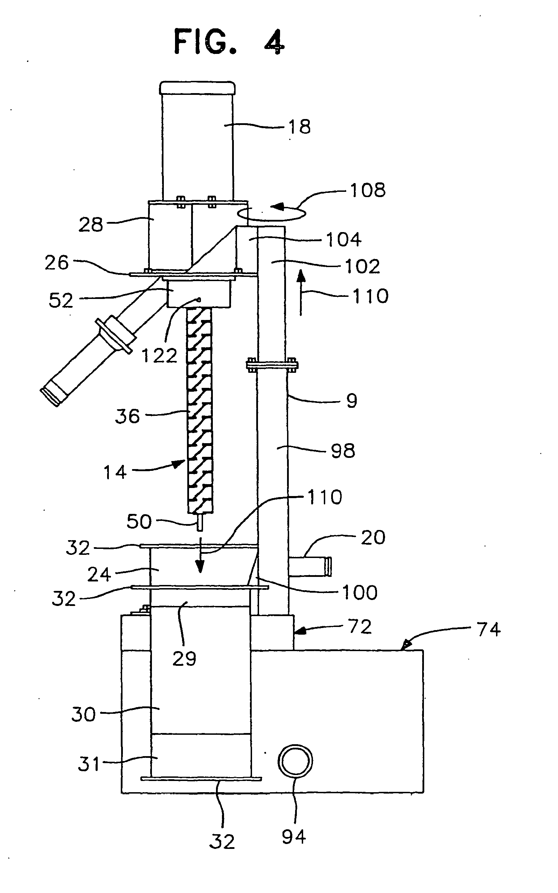

The upper tube 102 of the gas spring 96 is also capable of swivel movement which enables the lifted components to rotate about the vertical axis of the gas spring as indicated by arrow 108 in Figure 3. Thus, the upper section 30 of the housing and those components above the upper section along with the rotor 14 and screen 16 can then rotate out of alignment with the base section 24 and tank 92. Once the upper section 30 has been rotated out of alignment with the base section 24, the screen 16 can be dropped downwardly and removed as illustrated in Figure 3. Also, this structure enables the upper section 30 of the housing 12 to be separated from the top plate 26 and dropped downwardly as indicated by arrow 110 in Figure 4. This separation enables removal of the upper section of the housing thereby providing easy access to the rotor 14 which remains attached to the shaft coupling 40 as illustrated in Figure 4. The shaft 36 and inclined blades 40 can then be easily cleaned while being supported above the base section, or the axial extension 50 may be lowered into the guide bushing 48 to stabilize the lower end of the rotor 14 while being cleaned.

Figures 3 and 4 illustrate an additional support for the screen which is preferred in most installations. The additional support is in the form of two (or more) upwardly extending hooks 120 rigidly connected to the upper end wall 55 of the screen member 56. The hooks 120 are preferably oriented diametrically on the outer surface of wall 55 and open in opposite peripheral directions to engage with outwardly projecting pins 122 on top support structure 52. The hooks 120 and screen member 56 must be rotated counter-clockwise a partial revolution to release the screen to be moved downwardly for removal.

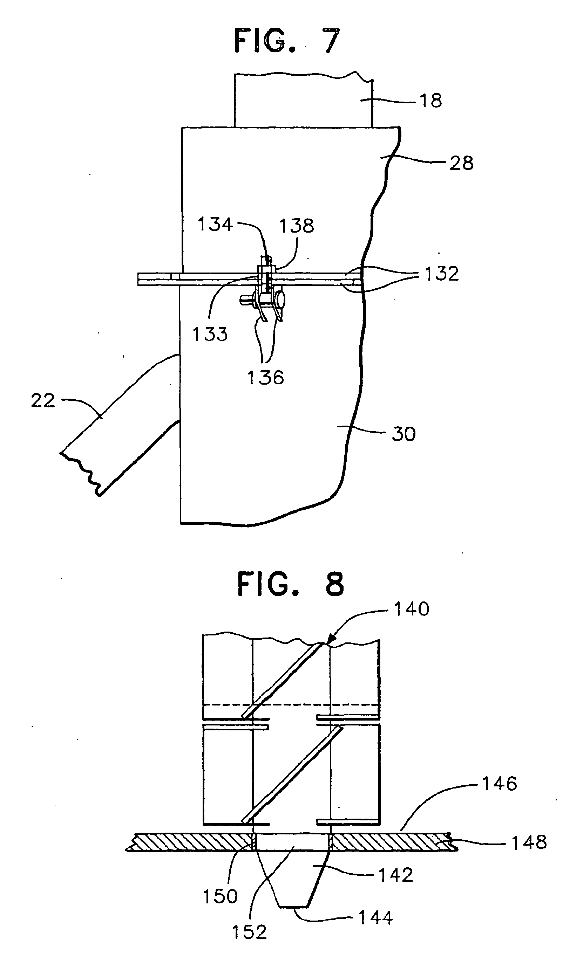

Figure 7 illustrates an additional preferred connection between housing sections in which each of the flanges 132 have a notch or slot 133 which has a swing bolt 134 extending therethrough. The lower end of swing bolt 134 is pivotally supported by support lugs 136 attached to the housing. The upper end of the bolt 134 includes a nut 138 which can be loosened sufficiently to enable pivotal movement of the bolt 134 without complete removal of the nut 138 and without separating the bolt from the housing thereby greatly facilitating the assembly and disassembly of the housing sections of the dryer. The swing bolt 134, support lugs 136 and nut 138, preferably in the form of a manually grasped handwheel, can be used in lieu of the bolt shown in Figures 1-6.

Figure 8 illustrates an additional preferred form of the bushing for the lower end of the rotor in which the lower end of rotor 140 is provided with a generally tapered lower end 142 with a flat lower end 144. In lieu of the bushing 48, a two-piece bushing assembly 146 is employed to guide the lower end of the rotor 140 during rotation. The bushing assembly 146 includes an outer member 148 of resin material and an inner sleeve or bushing 150 of metal. The sleeve or bushing 150 is cylindrical and rotatably engages and guides a cylindrical upper end portion 152 of the tapered lower end 142 of the rotor 140. The tapered lower end 142 assists in guiding the lower end of the rotor into the guide sleeve or bushing 150. Water passing through the bushing assembly 146 cools and lubricates the sleeve 150 and lower end of rotor 140. Like bushing 48, the bushing assembly 146 is supported in the bottom of the cup-shaped support 60 and can be replaced when necessary.

The function of the rotor 14 or 140, screen 16 and housing 12 together with the slurry inlet 20 and dried pellet outlet 22 are similar to the function of existing centrifugal pellet dryers. However, the manner in which the rotor is supported and driven and guided by a replaceable alignment bushing 48 or bushing assembly 146 and the sectional construction of the housing and the gas spring lift device cooperate to enable the components to be constructed with a reduced diameter housing, screen and reduced size rotor. The housing 12 of this embodiment of the invention can have an outside diameter in the range of 203.2 mm to 304.8 mm (8 to 12 inches) while most standard dryers have an outside diameter in the range of 762 mm to 1016 mm (30 to 40 inches). The screen 16 can have a diameter of approximately 152.4 mm (approximately 6 inches) with the outer corners of the blades 42 being spaced approximately 10.16 mm (approximately 0.400 inch) from the screen for optimum removal of water from the pellets. The blades 42 are preferably rectangular with the straight peripheral edges providing agitation of the pellets as they are lifted with the space between the blades and screen permitting some of the pellets to drop past upper blades and picked up by lower blades for more effective separation of water from the pellets. Also, the blade arrangement and configuration and their relationship to the screen reduces wear on the screen as compared to dryers which utilize a substantially continuous lifting and auguring effect that increases frictional engagement between the pellets and screen.

The components of the dryer of this embodiment are readily disconnected and the weight thereof supported by the gas spring 96 thereby facilitating the handling of the housing, screen, rotor and motor without the necessity of these components being physically lifted by an operator of the pellet dryer. The smaller diameter of the components in this form of the invention enables the dryer to be effectively used in a laboratory application, or other small operation, and enables the components to be easily disassembled and assembled, and the components easily cleaned or replaced when disassembled. The screen bottom drawer enables the water draining into the tank to be cleaned of any solid debris or pellets which may pass downwardly from the base section of the housing. The openings communicating the base section of the housing and the screened bottom drawer may be varied in size and frequency to enable gravity liquid flow downwardly from the base section without undue restriction.

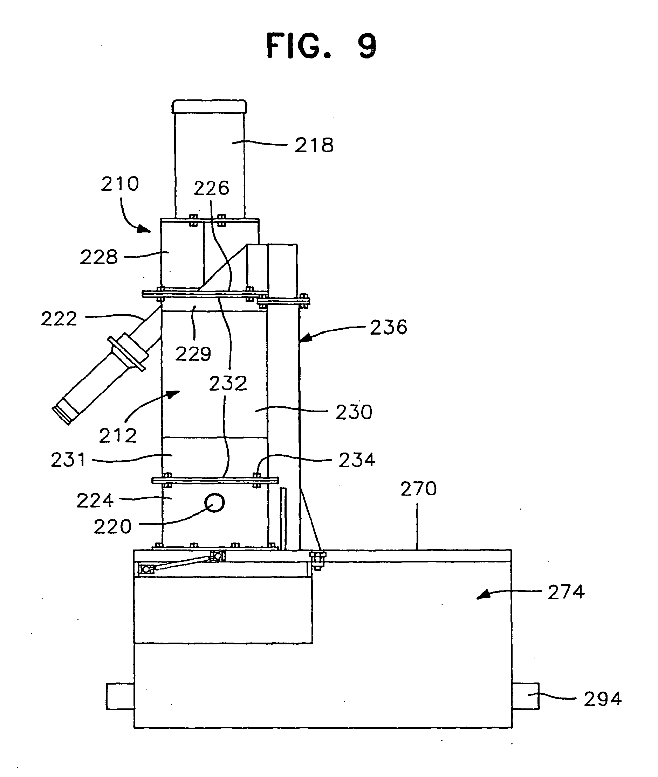

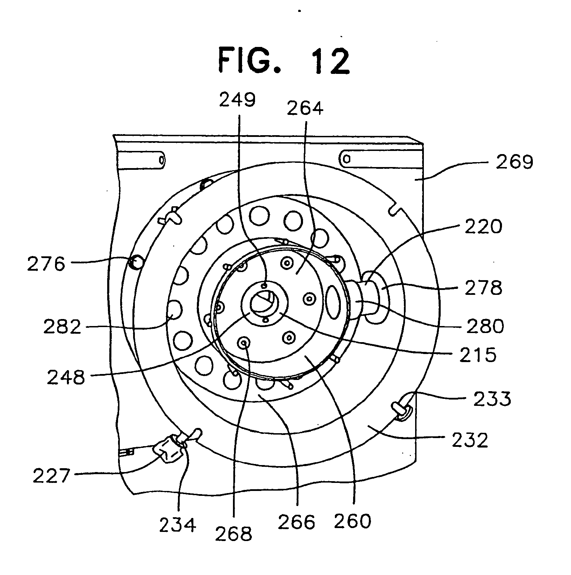

Figures 9-16 illustrate a second embodiment of the centrifugal pellet dryer of the present invention generally designated by reference numeral 210. This second embodiment is preferably a commercial form of the dryer of the present invention, having dimensions consistent with known centrifugal pellet dryers and thus substantially larger than a laboratory pellet dryer such as shown in Figures 1-8.

The dryer 210 includes a vertically disposed generally cylindrical housing generally designated by the numeral 212 having a vertical rotor 214 rotatably mounted therein and which is enclosed by a screen 216 in the same manner that screen 16 encloses rotor 14 in Figure 2. The rotor 214 is driven by a motor 218 preferably mounted atop the upper end of the dryer. The lower end of the dryer includes a slurry inlet 220 and the upper end of the dryer includes a dried pellet outlet 222. A water drain tank generally designated by the reference numeral 274 is mounted directly below the housing 212 and numeral 270 generally designates the top of tank 274.

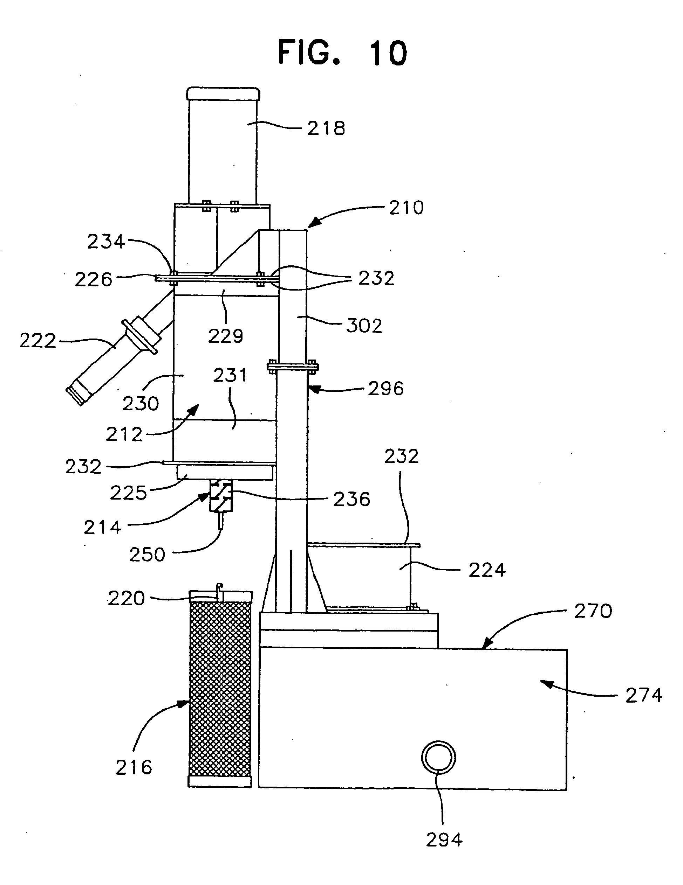

The housing 212 includes two separable sections, a base or lower section 224 and an elongated upper section 230 which is connected to top plate 226. The upper section 230 can include reinforcing collars 229 and 231 at the upper and lower ends. The sections 224 and 230 and top plate 226 are preferably interconnected by circular end flanges 232 secured together by conventional or swing bolts 234. As shown in Figure 10, the lower end of the upper section 230 of the housing 212 extends below flange 232 at the lower end thereof as indicated at 225 which is in close telescopic relation to the interior of base section 224 to provide a gasket free seal between the base section 224 and upper section 230 of housing 212. A coupling guard 228 is attached above top plate 226 as by bolts or the like. The housing sections 224 and 230 and top plate 226 are preferably constructed of a substantially rigid material, such as metal or plastic, that is sufficiently strong to support the structure of the dryer, is relatively inexpensive and can be constructed with relatively large diameters and heights.

The rotor 214 includes a central shaft 236, preferably square, positioned centrally in the vertical housing 212 and is drivingly engaged with a motor output shaft by a drive coupling similar to the shaft 38 and coupling 40 illustrated in Figure 6. The upper end of the dryer rotor 214 is provided with a support bearing similar to bearing 44 in Figure 6 and which is enclosed within the motor coupling guard 228. A motor support is enclosed by the guard 228 which is supported from the top plate 226 at the upper end of the housing 212. The support bearing supports the rotor 214 at its upper end and maintains its support in order that the lower end of the rotor shaft 236 can be guided by an alignment bushing 248 mounted in the base section 224 of housing 212. The lower end of the shaft 236 is provided with an axially extending shaft 250 similar to that illustrated in Figure 6 of reduced cross-sectional area and preferably of cylindrical configuration for rotational guided movement in cylindrical opening 251 in alignment bushing 248.

The upper section 230 of the housing 212 includes a downwardly extending cylindrical cup-shaped member supporting the upper end of the screen in the manner illustrated in Figures 1-8. The screen has its lower end supported from an upwardly facing cup-shaped cylindrical support 260 in the base section 224 in the same manner as the embodiment shown in Figures 1-8.

The lower cylindrical support 260 includes a bottom wall 264 that is secured to a bottom plate 266 of the base section 224 by fastening devices 268. The bottom plate 266 is secured to a pivotal portion 269 of the top wall 270 of water drain tank 274. The plate 266 is preferably secured with fastening bolts 276 thus securing the bottom plate 266 and base section 224 to pivotal portion 269 of the top wall 270 of tank 274. Positioned directly below the pivotal portion 269 of top wall 270 at the top of tank 274 is a fines separating screen assembly generally designated by reference numeral 272. The other portion 271 of top wall 270 is also preferably openable as by hinges to allow full access into the interior of the tank 274. Alignment bushing 248 is preferably disk shaped and replaceably secured to bottom wall 264 of support 260 by screws 249. Thus, the bushing 248 can be replaced if and when the opening 251 becomes worn. Bushing 248 is positioned in the center of bottom wall 264 so that the extending shaft 250 and, therefore, rotor shaft 236 are both positioned substantially along the central vertical axis of the dryer 210 within screen 216 and housing 212.

The base section 224 of the housing 212 includes the slurry inlet 220 which extends through a fitting 278 in the peripheral wall of the base section 224. The slurry inlet 220 extends into and is connected to a fitting 280 in the cylindrical member 260 thus communicating the slurry inlet 220 with the interior of the cylindrical member 260 and the screen 216. This enables the rotor 214 to rotate and lift the slurry and pellets upwardly and directing them outwardly toward the screen element 216 so that water entrained with the pellets will be discharged outwardly through the screen. The water discharged through the screen and outwardly of the lower cylindrical member 260 can pass through the base section 224 and the top wall 270 through apertures 282, thus enabling the water to drain into the fines separating screen assembly 272.

The tank 274 is also provided with an opening 294 to facilitate discharge of water separated from the pellets. A guard 295 prevents any uncaptured pellets or fines from escaping tank 274 with the waste water through opening 294. As the pellets are moved upwardly the water is removed by virtue of the forces of gravity and the centrifugal force of the pellets being forced toward the screen in a manner well known in the pellet drying art. Once the dried pellets reach the upper end of the rotor 214, they are discharged centrifugally into the dry pellet outlet 222 in communication with the upper cylindrical section 230 and then into a suitable container.

The upper section 230, the top plate 226, the coupling guard 228 and the motor 218 and its support along with the rotor 214 and screen 216 are all movably supported by a lifting device 296. The lifting device 296 is preferably a gas spring lift device which includes a stationary outer tube 298 rigidly affixed to base plate 299 by bracket structure 300 and fastening bolts. A swivelled vertically movable telescopic upper tube 302 is attached to the motor support and upper section 226 of the housing 212 by bracket structure 304. This lift device 296 will lift and support the upper section 230 of the housing and the rotor, screen, motor support and motor when the bolts 234 interconnecting the flanges 232 of the upper section 230 and the base section 224 of the housing are removed. The vertical movement of the upper tube 302 and its swivelling movement is illustrated in Figure 10. Alternatively, in large size dryers it may be desirable to use a positive lifting device, such as a screw jack as included in the third embodiment described hereinafter.

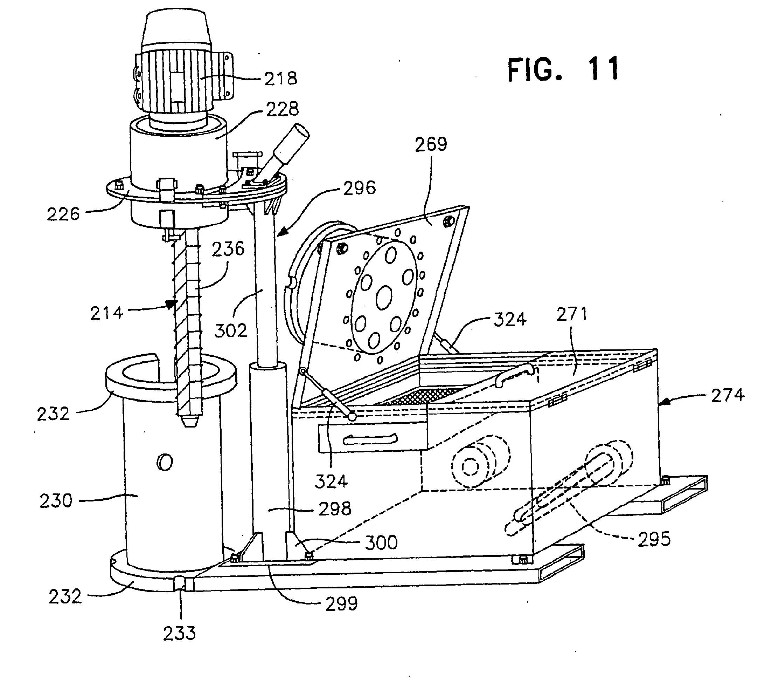

The swivel movement of upper tube 302 of the lift device 296 enables the lifted components to rotate about the vertical axis of the gas spring lift device. Thus, the upper section 230 of the housing and those components above the upper section along with the rotor 214 and screen 216 can then rotate out of alignment with the base section 224. Once the upper section 230 has been rotated out of alignment with the base section 224, the screen 216 can be disengaged at the top, dropped downwardly and removed. Also, this structure enables the upper section 230 of the housing 212 to be separated from the top plate 226 and dropped downwardly as illustrated in Figure 11. This separation enables removal of the upper section of the housing thereby providing easy access to the rotor 214 which remains attached to the shaft coupling. Shaft 236 including inclined blades 240 can then be easily cleaned while being supported away from the base section.

An additional support for the screen 216 is preferred in most installations. The additional support is in the form of two (or more) upwardly extending hooks 220 rigidly connected to the upper end wall of the screen in the manner described in connection with Figures 1-8. The hooks are preferably oriented diametrically on opposite side of the outer surface of the cylindrical wall at the upper end of the screen 216 and open in opposite peripheral directions to engage with outwardly projecting pins on top support structure. The hooks and screen must be rotated counter-clockwise a partial revolution to release the screen before it can be moved downwardly for removal.

The connection between housing sections includes outwardly extending mating flanges 232 on the bottom of the upper section 230 and the top of the base section 224 and provided with notches or slots 233 each of which has a swing bolt 234 extending therethrough. The lower end of swing bolt 234 is pivotally supported by support lugs 235 attached to the housing. The upper end of the bolt 234 includes a nut 227 in the form of a handwheel which can be loosened sufficiently to enable pivotal movement of the bolt 234 without complete removal of the nut 227 and without separating the bolt from the housing thereby greatly facilitating the assembly and disassembly of the housing sections of the dryer.

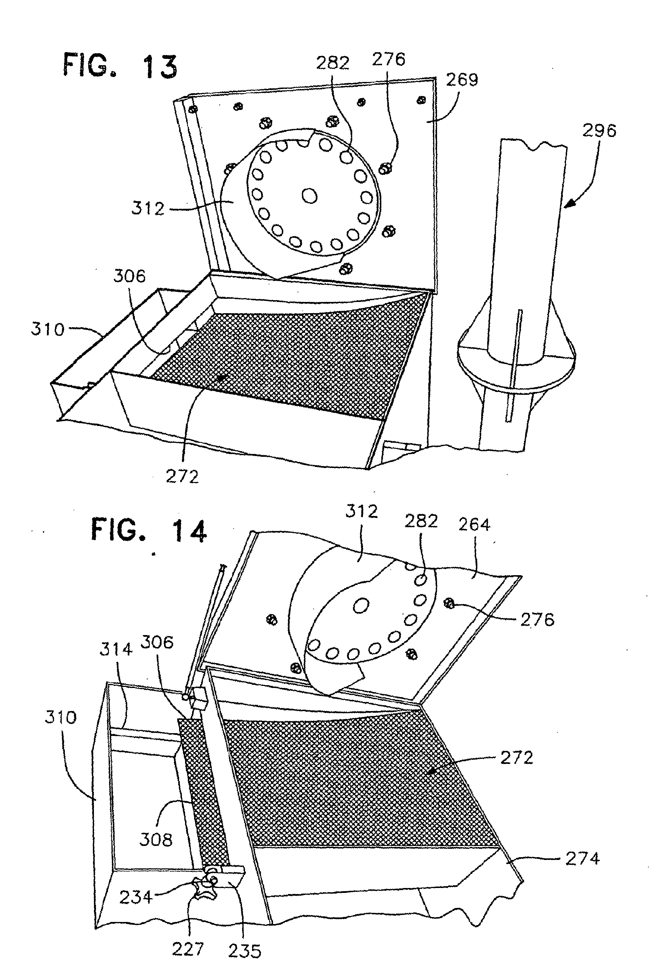

As illustrated in Figures 13-16, the inclined screen 272 is positioned below the pivotal portion 269 of the tank top 270 and extends from a high side adjacent one wall of the tank 274 slanting downwardly toward the opposite side. At the opposite side the screen 272 extends through a slot 306 with the terminal edge 308 of the screen being positioned vertically above a generally rectangular trap 310 mounted on the exterior of the tank 274. The under surface of the pivotal portion 269 of the tank top includes a downwardly extending arcuate baffle 312 which assures that the fines and water coming through the holes 282 will engage the screen 272 adjacent its upper end so that the fines and water will tend to move along the surface of the screen. The water thus passes through the screen 272 into the tank 274, and the fines are discharged from the edge 308 of the screen into the trap 310. The trap 310 includes supporting ledges 314 spaced upwardly from the bottom surface thereof for supporting a lift tray 316 which includes end handles 318 with the tray 316 including a screen section 320 forming the bottom of the tray 316. Thus, any water that may drop into the trap 310 along with the fines will drop to the bottom of the trap 310 and discharge through a drain opening 322 into a receptacle, drain piping or back into the collecting or drain tank 274. As shown in Figure 11, a drawer type fines screen as shown in Figures 1-8 can be used in this form of the invention.

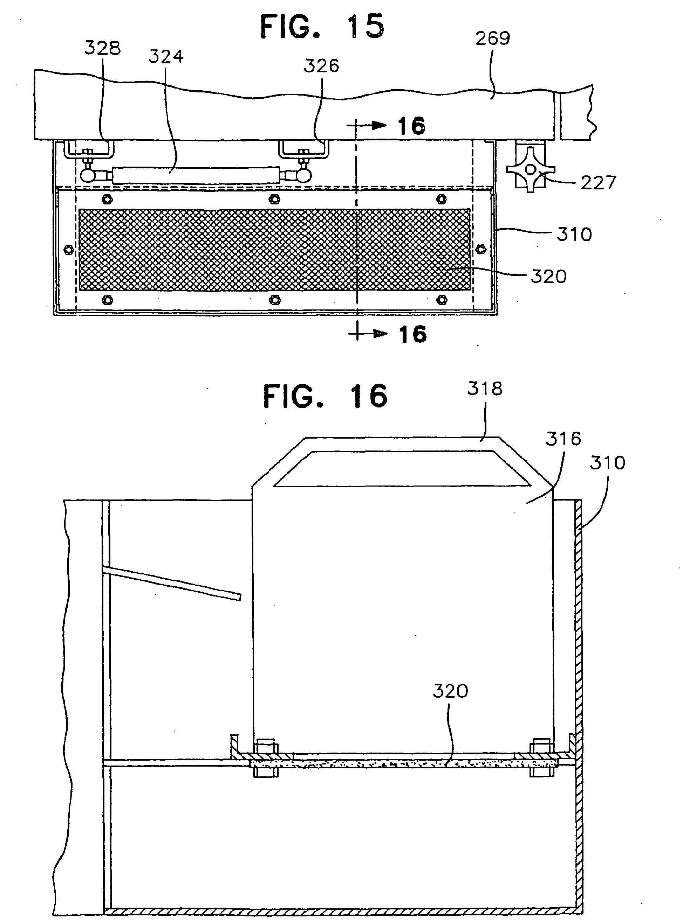

Figures 11 and 15 also illustrates lift devices 324 connected between the tank 274 and the pivotal portion 269 of tank top 270 which has the base section 224 mounted thereon. The lift device 324 facilitate the pivotal movement of the tank top portion 269 to provide access to the screen 272 and also tilt the base section for cleaning and replacement of components as necessary. The lift devices 324 are also in the form of a gas lift cylinder at each side of the pivotal portion 269 and is connected to the pivotal portion 269 by brackets 326 and to the tank by brackets 328. The tank top 269 and 271 may pivot at the outer edges as shown or at either edge.

The provision of the screen device and baffle assures the separation of fines from water with the water draining into the collecting tank and the fines being deposited in the trap mounted on the side of the tank.

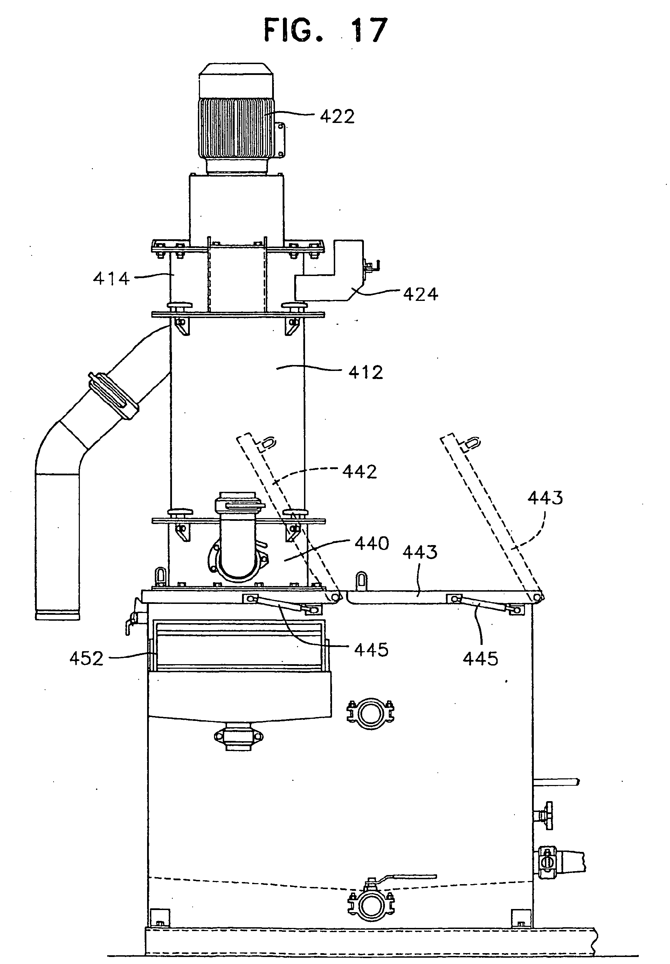

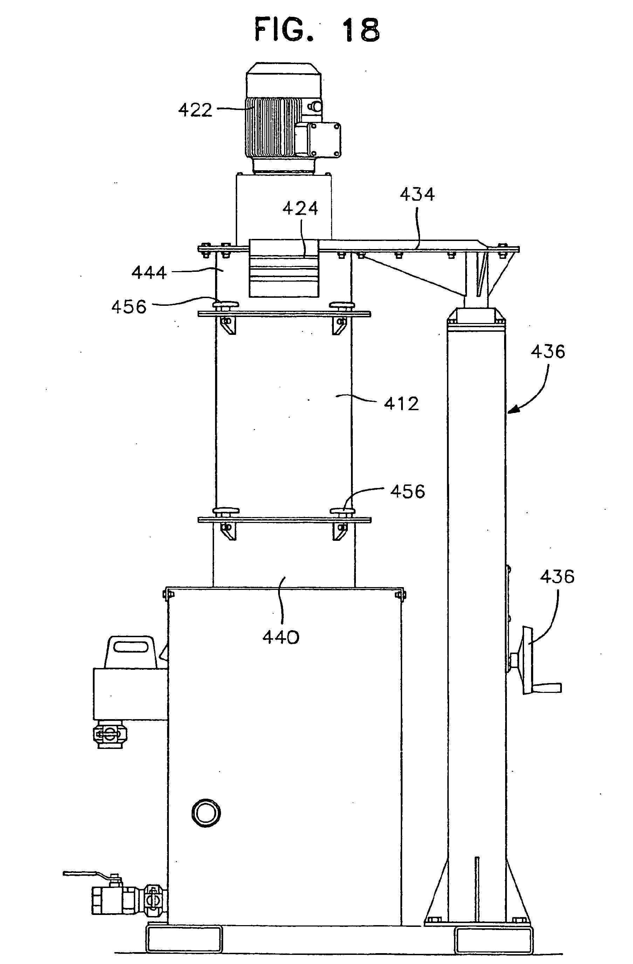

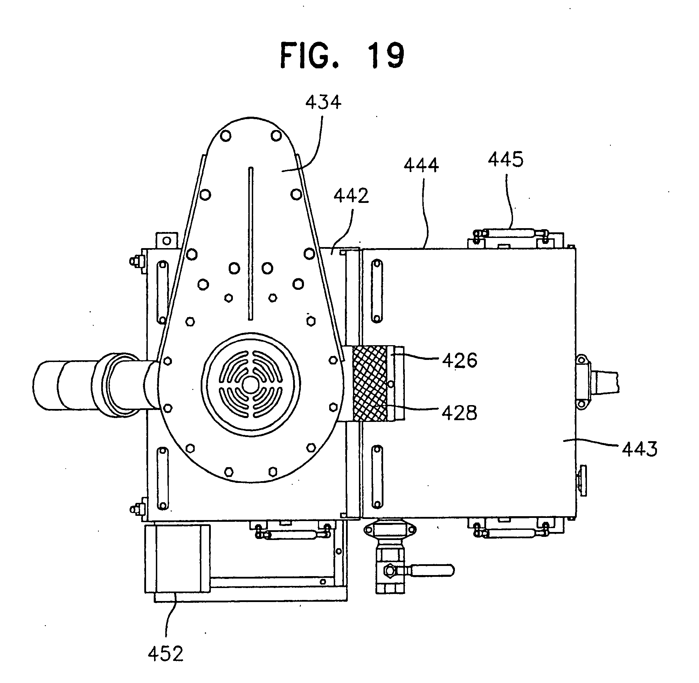

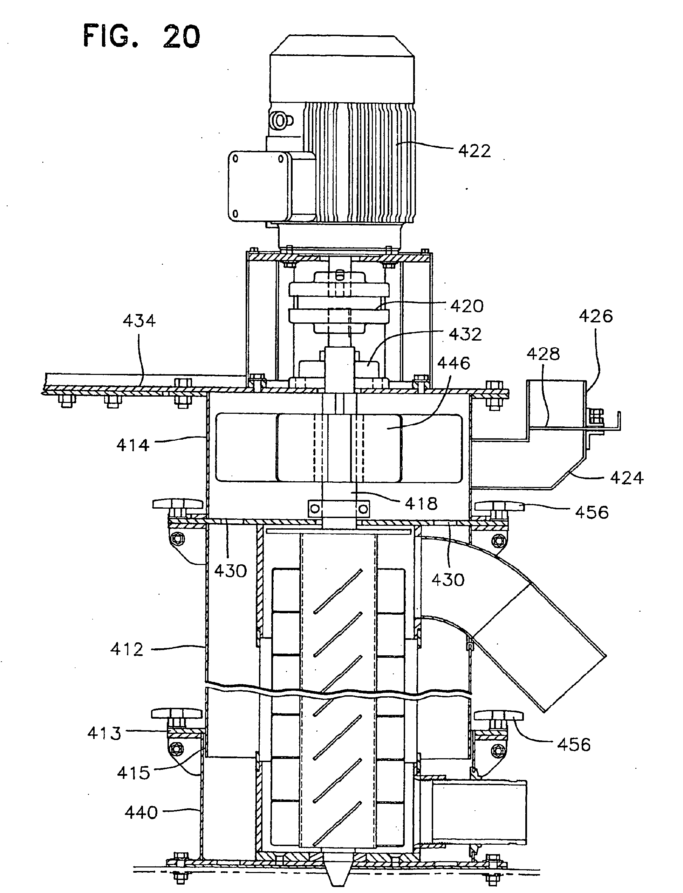

Figures 17-22 illustrate another commercial embodiment of the invention in which the tank, housing, screen, rotor and motor are all similar to the structures illustrated in Figures 1-16. However, in this embodiment of the invention, a fan, preferably a centrifugal fan 416, and cylindrical fan housing 414 are mounted above the cylindrical housing 412 of the dryer and below the top or support plate 434 which supports the motor 422. The fan 416 is connected to the motor drive shaft 418 below the shaft coupling 420 and is driven by the motor 422. The fan housing 414 includes a laterally extending discharge or outlet 424 having an upwardly extending terminal end 426 provided with a screen 428 therein. The fan housing 414 also includes a bottom plate 431 and the interior of the fan housing 414 communicates with the lower sections of the dryer housing 412 through openings 430 in plate 431. With fan 416 operating, the openings 430 permit air to circulate upwardly through the housing 412 to assist in removing moisture from the pellets being dried. The structure of the fan and its relationship to the other components of the pellet dryer is best illustrated in Figure 20 with the lower portion of the housing 412 being the same as described in the previous embodiments of the invention and the operation of the rotor, blades, screen, slurry inlet and dried pellet outlet also being the same.

The lower end of the rotor is also journalled in a bushing rather than a supporting bearing, as in the previous embodiments, and the entire weight of the rotor is thus supported by support bearing 432 at the upper end of the fan housing 414 which is closed by the support plate 434. The dryer housing 412 and the components above the housing 412 are vertically lifted by a lift device 436 connected to the support plate 434 which projects to one side of the housing. The lift device 436 is a manually operated screw lift device having a hand crank 438 attached thereto to rotate a threaded component in the form of a nut which engages an elongated lead screw to raise and lower the support plate 434. This structure is similar to a mechanical lift jack with the vertically moveable member also being capable of permitting the support plate and the elevated housing and related components to swivel about a vertical axis to an out of the way position for cleaning and repair.

As illustrated in Figure 20, the lower end of the upper section of the housing 412 extends below the flanges 413 to form a gasket free seal at 415 between a base section 440 and the upper section of housing 412. This gasket free seal 415 can be used in each embodiment of the present invention.

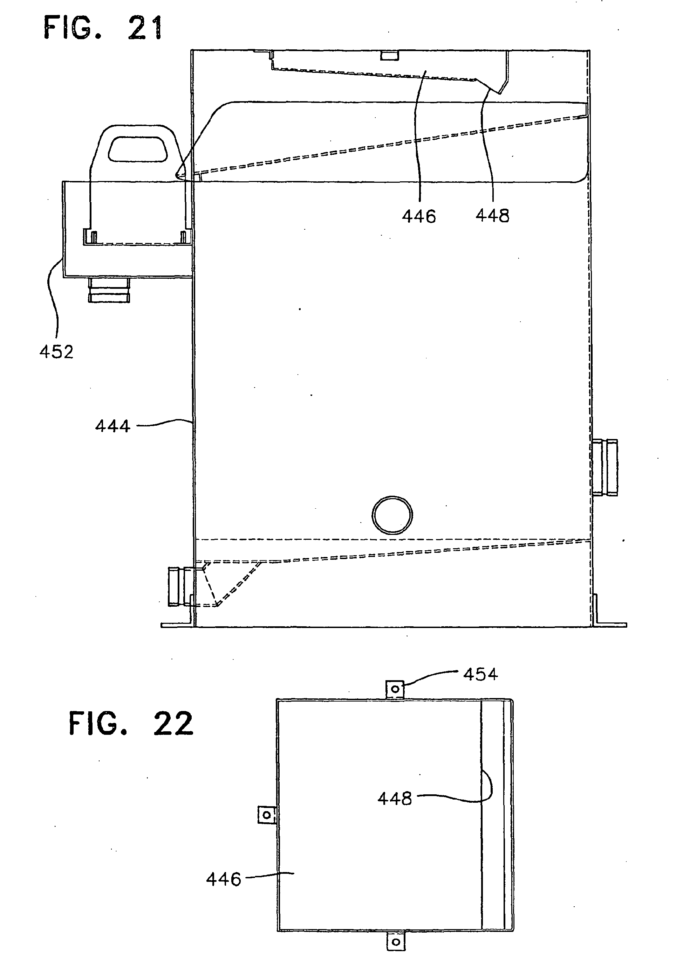

In this embodiment..of the invention, the housing base section 440 is mounted on a pivotal section 442 of the water drain tank top. The water drain tank top includes a second pivotal section 443, and the pivotal sections 442 and 443 each is provided with a gas lift cylinder 445 so that the entire top of the water drain tank can be easily opened for access to the tank. The pivotal section or sections of the tank top may be pivotally connected to any edge of the tank with gas spring lift devices 445 provided in each embodiment of the invention to assist in pivoting the base section of the housing to an inclined position. Also, swing bolts 456 such as shown in Figure 7 at 134 are preferably used in this form of the invention. The bottom surface of the tank top pivotal portion 442 below base section 440 is provided with a slanted baffle plate 446 (see Figure 21) which has a lower discharge edge 448 in alignment with an upper end portion of slanted or inclined screen 450 so that the drain water and any fines entrained therein will be discharged onto the screen 450 adjacent its upper end. The inclined screen 450 extends through an opening in the wall of the tank 444 into a screen trap 452. The baffle 446 is in the form of a tray having mounting lugs 454 at its upper edges to secure the baffle 446 to the under surface of the pivotal tank top 442.

If desired, the dryer of this invention may be provided with a pump to recirculate water from the drain tank back to an associated underwater pelletizer, and a screen or other device may be incorporated into the slurry inlet to remove pellet agglomerates. In commercial embodiments of the invention, the dryer housing can have an outside diameter of approximately 1016 mm (approx. 40 inches) suitable for commercial applications. The screen can have a diameter of approximately 914.4 mm (approx. 36 inches) with the outer corners of the blades being spaced inwardly approximately 25.4 to 50.8 mm (approx. 1 to 2 inches) from the screen for optimum removal of water from the pellets. The blades are preferably rectangular with the straight peripheral edges providing agitation of the pellets as they are lifted with the space between the blades and screen permitting some of the pellets to drop past upper blades and picked up by lower blades for more effective separation of water from the pellets. Also, the blade arrangement and configuration and their relationship to the screen reduces wear on the screen as compared to dryers which utilize a substantially continuous lifting and auguring effect that increases frictional engagement between the pellets and screen.

The components of the dryer of the present invention are readily disconnected and the weight thereof supported by the lift device thereby facilitating the handling of the housing, screen, rotor and motor without the necessity of these components being physically lifted by an operator of the pellet dryer. The lifting device not only lifts the upper housing section, screen and rotor away from the housing base section and water drain tank, but also provides for swiveling of these components away from the remaining lower components. By this upward movement and rotation of the top supported components away from the stationary base components, all of the components of the centrifugal pellet dryer including the upper bearing assembly, the rotor, the bottom of the housing including the alignment bushing and holes for passage of water into the water drain tank, can be readily cleaned, serviced and/or replaced as necessary. Similarly, the lifting and swiveling mechanism allows the top of the water tank to be readily opened for access to the interior thereof despite the mounting of the housing directly on the top of the tank. Hence, the dryer of the present invention can be adopted for a large range of pellet dryer applications including small laboratory usages up to very large commercial dryer applications.

The foregoing is considered as illustrative only of the principles of the invention. Further, numerous modifications and changes will readily occur to those skilled in the art. For example, while screens are preferably one-piece screen elements, these screens can be constructed of two or more separable sections connected together as a one-piece structure.

## Claims

1. A dryer for removing surface moisture from pelletized product in the form of a slurry of pellets and water comprising a cylindrical housing (12; 212; 412) with a base section (24; 224) and upper section (30; 230) each having the same internal diameter, a cylindrical screen (16; 216) mounted generally vertically within said housing, an elevating rotor (14; 214) positioned generally vertically within said screen, said rotor including a shaft (38; 236) rotatably supported by a support bearing (44) on said upper section, a motor (18; 218) mounted on said upper section of said housing and drivingly connected to said rotor shaft, a slurry inlet (20; 220) communicating with an interior of said screen adjacent a lower portion thereof, a dried pellet outlet (22; 222) communicating with the interior of said screen (16; 216) adjacent an upper end thereof, and a lower end portion (50) of said rotor shaft (38; 236) being rotationally guided in said base section of said housing, **characterized in that** said cylindrical screen (16; 216) extends, at least partly, down into said base section of said housing (12; 212) and said upper section (30; 230) is fully separable from said base section (24; 224) for cleaning and servicing interiorly of said housing (12; 212; 412).

2. The dryer as defined in claim 1, wherein said base section (24; 224) of said housing (12; 212; 412) includes an alignment element (48; 248) guidingly receiving a lower end portion of said rotor (14; 214).

3. The dryer as defined in claim 1, wherein said housing (12; 212) is supported on a top wall (270) of a tank (74; 274) and in communication with the tank (74; 274) for discharge of water from said screen (16; 216) and housing (12; 212) directly into the tank (74; 274).

4. The dryer as defined in claim 1, further comprising a lift device (96; 296; 436) to elevate said upper section (30; 230) when separated from said base section (24; 224).

5. The dryer as defined in claim 4, wherein said lift device (96; 296; 436) supports said motor (18; 218), said rotor (14; 214), said screen (16; 216), a top plate (26; 226; 434) and said housing upper section (30; 230) when said housing upper section is separated from said housing base section (24; 224; 440) and elevated upwardly by said lift device (96; 296; 436).

6. The dryer as defined in claim 3, wherein said tank (74) includes a screen bottomed drawer (83) receiving water from said housing (12) to separate solid particles entrained in said water, said drawer (83) being slidably mounted in a top area of said tank (74) to enable removal of solid particles from the drawer (83).

7. The dryer as defined in claim 2, wherein said lower end of said rotor (14; 214) includes an axial extension (50; 250) rotatably engaged with said alignment element (48; 248), said alignment element (48; 248) being fixed in concentric relation to the screen (16; 216) and said base section (24; 224) of the housing (12; 212) and being lubricated and cooled by water removed from said slurry.

8. The dryer as defined in claim 1, wherein said base section (24; 224) is communicated with a tank (74; 274) for receiving moisture passing through the screen (16; 216), through the base section (24; 224) and into the tank (74; 274).

9. The dryer as defined in claim 8, wherein said housing (12) includes upper (52) and lower (60) members in alignment with and supporting engagement with upper and lower ends of said screen (16), the ends of said screen (16) and said members (52, 60) including an interfitted relation whereby moisture passing through the screen (16), will pass downwardly exteriorly of the lower member for passage into said tank (74).

10. The dryer as defined in claim 9, wherein said lower member includes a plurality of upwardly diverging rods (63) guiding a lower end of the screen (16) into interfitted relation with an upper end of said lower member (60).

11. The dryer as defined in claim 9, wherein an upper end of said screen and said upper member (52) have coacting support structure (120, 122) to detachably support said screen from said upper member.

12. The dryer as defined in claim 11, wherein said screen (16) includes a pair of hooks (120) on an upper end, said upper member including a pair of projecting pins (122) detachably supporting said hooks and screen.

13. The dryer as defined in claim 12, wherein said hooks (120) open peripherally of said screen to enable the screen to be assembled onto and separated from said upper member by partial rotation of the screen.

14. The dryer as defined in claim 8, wherein said tank (274) includes a screen (272) below said base section for removing fines from water entering the tank (274) from the housing (212).

15. The dryer as defined in claim 14, wherein said screen (272) in said tank (274) is mounted in a removable.frame inserted into said tank (274).

16. The dryer as defined in claim 14, wherein said screen (272) in said tank (274) is inclined and includes a lower edge portion in registry with an opening (306) in a wall of said tank (274) for discharging fines through said opening.

17. The dryer as defined in claim 16, wherein a fines receiving tray (316) is positioned externally of said tank (274) in association with said opening (306) to receive fines discharged through said opening (306).

18. The dryer as defined in claim 8, wherein said tank includes a movable top portion (269), said base section (224) of said housing (214) being mounted on said movable top portion (269) of the tank (274).

19. The dryer as defined in claim 18, wherein said movable portion (269) of the top portion of the tank (274) is pivotally supported to enable said base section (224) to be pivoted toward a position to enable cleaning when the upper section (230) of said housing (212) is elevated by a lift device (296).

20. The dryer as defined in claim 1, further comprising an air fan (446) mounted in said upper section of said housing (412), said fan (446) being driven by a motor (422), said fan (446) moving drying air upwardly through the housing (412) for discharge from an upper portion of the housing (412).

21. The dryer as defined in claim 4, wherein said lift device (96; 296) includes an elevating element (102; 302) swivelled about a vertical axis when the elevating element (102; 302) lifts the upper section (30; 230) upwardly thereby enabling the elevated component to swing about a vertical axis to a position spaced laterally of said base section (24; 224) of the housing (12; 212) to enable removal of the screen (16; 216) and to facilitate cleaning of the dryer.

22. The dryer as defined in claim 21, wherein said lift device (96; 296) is a gas spring.

23. The dryer as defined in claim 21, wherein said lift device (436) is a manually operated lift jack.

24. The dryer as defined in claim 19, wherein a screen (272) in said tank (274) includes a screen bottomed drawer receiving water from said housing (212) to separate solid particles entrained in said water, said drawer being slidably mounted in a top area of said tank (274) to enable removal of solid particles from the drawer.

25. The dryer as defined in claim 5, wherein the lift device (96; 296; 436) lifts said upper section (30; 230) of the housing (12; 212; 412), rotor (14; 214) and screen (16; 216) generally vertically and upwardly away from and out of said base section (24; 224; 440), said lift device (96, 296, 436) being rotatable to rotate said upper section of the housing (12; 212; 412), rotor (14; 214) and screen (16; 216) away from vertical alignment with said base section (24; 224; 440).

26. The dryer as defined in claim 17, wherein said fines receiving tray (310) includes a bottom screen (320) to further separate fines from water discharged into the tank.

27. The dryer as defined in claim 26, wherein said fines receiving tray (310) is removably supported from said tank to enable removal of separated fines from the tank.

28. The dryer as defined in claim 8, wherein said tank (274) includes a screen member (272) mounted in a top area of said tank (274) for receiving water from said housing (212) to separate solid particles entrained in said water.

29. The dryer as defined in claim 28, wherein said screen (272) is inclined to discharge pellet fines from a lower edge thereof into a fines collection tray (316) underlying said lower edge of the screen (272), said fines collection tray (316) being positioned externally of said tank.

30. The dryer as defined in claim 29, wherein said fines collection tray (316) includes a bottom screen (320) to further separate fines from water discharged into the tank (274).

31. The dryer as defined in claim 30, wherein said fines collection tray (316) is removably supported from said tank (274) to enable removal of separated fines from the tank (274).

32. The dryer as defined in claim 21, wherein said rotor (14; 214) and said screen (16; 216), together with said housing upper section (30; 230), are all movably supported by said lift device (96; 296).

33. The dryer as defined in claim 32, wherein said motor (18; 218) is mounted on said housing upper section (30; 230) and thereby movably supported by said lift device (96; 296) together with said housing upper section.

## Patentansprüche

1. Trockner zum Entfernen von Oberflächenfeuchtigkeit aus einem granuliertem Produkt in Form eines Schlickers aus Granulat und Wasser, welcher umfasst: ein zylindrisches Gehäuse (12; 212; 412) mit einem unterem Abschnitt (24; 224) und einem oberen Abschnitt (30; 230), die jeweils den gleichen Innendurchmesser aufweisen, ein zylindrisches Sieb (16; 216), das im Allgemeinen vertikal in dem Gehäuse eingebaut ist, einen Heberotor (14; 214), der im Allgemeinen vertikal in dem Sieb positioniert ist, wobei der Rotor eine Welle (38; 236) umfasst, die von einem Traglager (44) an dem oberen Abschnitt drehbar gelagert ist, einen Motor (18; 218), der an dem oberen Abschnitt des Gehäuses angebracht und mit der Rotorwelle treibend verbunden ist, einen Schlickereinlass (20; 220), der mit einem Innenraum des Siebs benachbart zu einem unteren Teil davon in Verbindung steht, einen Auslass für getrocknetes Granulat (22; 222), der mit dem Innenraum des Siebs (16; 216) benachbart zu einem oberen Ende davon in Verbindung steht, und einen unteren Endteil (50) der Rotorwelle (38; 236), der in dem unteren Abschnitt des Gehäuses drehbar geführt ist, **dadurch gekennzeichnet, dass** sich das zylindrische Sieb (16; 216) zumindest teilweise nach unten in den unteren Abschnitt des Gehäuses (12; 212) erstreckt und der obere Abschnitt (30; 230) von dem unteren Abschnitt (24; 224) zum inneren Reinigen und Warten des Gehäuses (12; 212; 412) vollständig trennbar ist.

2. Trockner nach Anspruch 1, **dadurch gekennzeichnet, dass** der untere Abschnitt (24; 224) des Gehäuses (12; 212; 412) ein Ausrichtungselement (48; 248) umfasst, das einen unteren Endteil des Rotors (14; 214) führend aufnimmt.

3. Trockner nach Anspruch 1, **dadurch gekennzeichnet, dass** das Gehäuse (12; 212) an einer oberen Wand (270) eines Tanks (74; 274) gelagert ist und mit dem Tank (74; 274) zum Ablassen von Wasser aus dem Sieb (16; 216) und dem Gehäuse (12; 212) direkt in den Tank (74; 274) in Verbindung steht.

4. Trockner nach Anspruch 1, welcher weiterhin eine Hebevorrichtung (96; 296; 436) zum Heben des oberen Abschnitts (30; 230) nach Abtrennen von dem unteren Abschnitt (24; 224) umfasst.

5. Trockner nach Anspruch 4, **dadurch gekennzeichnet, dass** die Hebevorrichtung (96; 296; 436) den Motor (18; 218), den Rotor (14; 214), das Sieb (16; 216), eine obere Platte (26; 226; 434) und den oberen Abschnitt (30; 230) des Gehäuses lagert, wenn der obere Abschnitt des Gehäuses von dem unteren Abschnitt (24; 224; 440) des Gehäuses getrennt ist und von der Hebevorrichtung (96; 296; 436) nach oben gehoben wird.

6. Trockner nach Anspruch 3, **dadurch gekennzeichnet, dass** der Tank (74) ein Schubfach (83) mit Siebboden umfasst, das Wasser von dem Gehäuse (12) aufnimmt, um in dem Wasser mitgeführte Feststoffpartikel abzutrennen, wobei das Schubfach (83) in einem oberen Bereich des Tanks (74) gleitend angebracht ist, um das Entfernen von Feststoffpartikeln aus dem Schubfach (83) zu ermöglichen.

7. Trockner nach Anspruch 2, **dadurch gekennzeichnet, dass** das untere Ende des Rotors (14; 214) eine axiale Verlängerung (50; 250) umfasst, die mit dem Ausrichtungselement (48, 248) drehbar in Eingriff steht, wobei das Ausrichtungselement (48; 248) in konzentrischer Beziehung zu dem Sieb (16; 216) und dem unteren Abschnitt (24; 224) des Gehäuses (12; 212) befestigt ist und von dem aus dem Schlicker entfernten Wasser geschmiert und gekühlt wird.

8. Trockner nach Anspruch 1, **dadurch gekennzeichnet, dass** der untere Abschnitt (24; 224) mit einem Tank (74; 274) zum Aufnehmen von durch das Sieb (16; 216), durch den unteren Abschnitt (24; 224) und in den Tank (74; 274) tretender Feuchtigkeit in Verbindung steht.

9. Trockner nach Anspruch 8, **dadurch gekennzeichnet, dass** das Gehäuse (12) ein oberes (52) und unteres (60) Bauteil in Ausrichtung und lagerndem Eingriff mit dem oberen und unteren Ende des Siebs (16) umfasst, wobei die Enden des Siebs (16) und der Bauteile (52, 60) eine Zusammenspielbeziehung umfassen, wodurch durch das Sieb (16) tretende Feuchtigkeit zum Treten in den Tank (74) nach unten aus dem unteren Bauteil heraus tritt.

10. Trockner nach Anspruch 9, **dadurch gekennzeichnet, dass** das untere Bauteil mehrere nach oben auseinanderstrebende Stangen (63) umfasst, die ein unteres Ende des Siebs (16) in eine Zusammenspielbeziehung mit einem oberen Ende des unteren Bauteils (60) leiten.

11. Trockner nach Anspruch 9, **dadurch gekennzeichnet, dass** ein oberes Ende des Siebs und das obere Bauteil (52) eine zusammenwirkende Tragstruktur (120, 122) aufweisen, um das Sieb ablösbar von dem oberen Bauteil zu lagern.

12. Trockner nach Anspruch 11, **dadurch gekennzeichnet, dass** das Sieb (16) ein Paar von Haken (120) an einem oberen Ende umfasst, wobei das obere Bauteil ein Paar von abstehenden Stiften (122) umfasst, die die Haken und das Sieb ablösbar lagern.

13. Trockner nach Anspruch 12, **dadurch gekennzeichnet, dass** die Haken (120) sich peripher an dem Sieb öffnen, um durch teilweise Drehung des Siebs ein Montieren des Siebs auf und ein Trennen des Siebs von dem oberen Bauteil zu ermöglichen.

14. Trockner nach Anspruch 8, **dadurch gekennzeichnet, dass** der Tank (274) zum Entfernen von Feinstoffen aus dem aus dem Gehäuse (212) in den Tank (274) eintretenden Wasser ein Sieb (272) unterhalb des unteren Abschnitts umfasst.

15. Trockner nach Anspruch 14, **dadurch gekennzeichnet, dass** das Sieb (272) in dem Tank (274) in einem in den Tank (274) eingesetzten entfernbaren Rahmen montiert ist.

16. Trockner nach Anspruch 14, **dadurch gekennzeichnet, dass** das Sieb (272) in dem Tank (274) geneigt ist und einen unteren Kantenteil deckungsgleich zu einer Öffnung (306) in einer Wand des Tanks (274) zum Ablassen von Feinstoffen durch die Öffnung umfasst.

17. Trockner nach Anspruch 16, **dadurch gekennzeichnet, dass** ein Feinstoffaufnahmeeinsatz (316) außerhalb des Tanks (274) der Öffnung (306) zugeordnet positioniert ist, um durch die Öffnung (306) abgelassene Feinstoffe aufzunehmen.

18. Trockner nach Anspruch 8, **dadurch gekennzeichnet, dass** der Tank einen beweglichen oberen Teil (269) umfasst, wobei der untere Abschnitt (224) des Gehäuses (214) an dem beweglichen oberen Teil (269) des Tanks (274) angebracht ist.

19. Trockner nach Anspruch 18, **dadurch gekennzeichnet, dass** der bewegliche Teil (269) des oberen Teils des Tanks (274) schwenkbar gelagert ist, um ein Schwenken des unteren Abschnitts (224) hin zu einer Position zum Ermöglichen von Reinigen zu ermöglichen, wenn der obere Abschnitt (230) des Gehäuses (212) durch eine Hebevorrichtung (296) angehoben wird.

20. Trockner nach Anspruch 1, welcher weiterhin einen Luftventilator (446) umfasst, der in dem oberen Abschnitt des Gehäuses (412) montiert ist, wobei der Ventilator (446) durch einen Motor (422) angetrieben wird, wobei der Ventilator (446) trocknende Luft nach oben durch das Gehäuse (412) zum Auslassen aus einem oberen Teil des Gehäuses (412) bewegt.

21. Trockner nach Anspruch 4, **dadurch gekennzeichnet, dass** die Hebevorrichtung (96; 296) ein Hebeelement (102; 302) umfasst, das um eine vertikale Achse geschwenkt wird, wenn das Hebeelement (102; 302) den oberen Abschnitt (30; 230) nach oben hebt, wodurch es der angehobenen Komponente ermöglicht wird, um eine vertikale Achse zu einer seitlich von dem unteren Abschnitt (24; 224) des Gehäuses (12; 212) beabstandeten Position zu schwenken, um das Entfernen des Siebs (16; 216) zu ermöglichen und das Reinigen des Trockners zu erleichtern.

22. Trockner nach Anspruch 21, **dadurch gekennzeichnet, dass** die Hebevorrichtung (96; 296) eine Gasfeder ist.

23. Trockner nach Anspruch 21, **dadurch gekennzeichnet, dass** die Hebevorrichtung (436) ein manuell betätigter Heber ist.

24. Trockner nach Anspruch 19, **dadurch gekennzeichnet, dass** ein Sieb (272) in dem Tank (274) ein Schubfach mit Siebboden umfasst, das Wasser von dem Gehäuse (212) aufnimmt, um in dem Wasser mitgeführte Feststoffpartikel abzutrennen, wobei das Schubfach in einem oberen Bereich des Tanks (274) gleitend angebracht ist, um das Entfernen von Feststoffpartikeln aus dem Schubfach zu ermöglichen.

25. Trockner nach Anspruch 5, **dadurch gekennzeichnet, dass** die Hebevorrichtung (96; 296; 436) den oberen Abschnitt (30; 230) des Gehäuses (12; 212; 412), den Rotor (14; 214) und das Sieb (16; 216) im Allgemeinen vertikal und nach oben weg von und aus dem unteren Abschnitt (24; 224; 440) hebt, wobei die Hebevorrichtung (96, 296, 436) drehbar ist, um den oberen Abschnitt des Gehäuses (12, 212; 412), den Rotor (14; 214) und das Sieb (16; 216) weg aus der vertikalen Ausrichtung mit dem unteren Abschnitt (24; 224; 440) zu drehen.

26. Trockner nach Anspruch 17, **dadurch gekennzeichnet, dass** der Feinstoffaufnahmeeinsatz (310) ein unteres Sieb (320) umfasst, um Feinstoffe weiter von in den Tank abgelassenem Wasser zu trennen.

27. Trockner nach Anspruch 26, **dadurch gekennzeichnet, dass** der Feinstoffaufnahmeeinsatz (310) von dem Tank abnehmbar gelagert ist, um ein Entfernen von abgetrennten Feinstoffen aus dem Tank zu ermöglichen.

28. Trockner nach Anspruch 8, **dadurch gekennzeichnet, dass** der Tank (274) ein Siebelement (272) umfasst, das in einem oberen Bereich des Tanks (274) zum Aufnehmen von Wasser von dem Gehäuse (212) angebracht ist, um in dem Wasser mitgeführte Feststoffpartikel abzutrennen.

29. Trockner nach Anspruch 28, **dadurch gekennzeichnet, dass** das Sieb (272) geneigt ist, um Granulatfeinstoffe von einer unteren Kante davon in einen Feinstoffsammeleinsatz (316), der unter der unteren Kante des Siebs (272) liegt, abzusondern, wobei der Feinstoffsammeleinsatz (316) außerhalb des Tanks positioniert ist.

30. Trockner nach Anspruch 29, **dadurch gekennzeichnet, dass** der Feinstoffsammeleinsatz (316) ein unteres Sieb (320) zum weiteren Abtrennen von Feinstoffen von in den Tank (274) abgelassenem Wasser umfasst.

31. Trockner nach Anspruch 30, **dadurch gekennzeichnet, dass** der Feinstoffsammeleinsatz (316) von dem Tank (274) abnehmbar gelagert ist, um ein Entfernen von abgetrennten Feinstoffen aus dem Tank (274) zu ermöglichen.

32. Trockner nach Anspruch 21, **dadurch gekennzeichnet, dass** der Rotor (14; 214) und das Sieb (16; 216) zusammen mit dem oberen Abschnitt (30; 230) des Gehäuses alle von der Hebevorrichtung (96; 296) beweglich gelagert sind.

33. Trockner nach Anspruch 32, **dadurch gekennzeichnet, dass** der Motor (18; 218) an dem oberen Abschnitt (30; 230) des Gehäuses angebracht ist und **dadurch** von der Hebevorrichtung (96; 296) zusammen mit dem oberen Abschnitt des Gehäuses beweglich gelagert ist.

## Revendications

1. Dessiccateur destiné à évacuer une humidité superficielle d'un produit en granulés sous la forme d'une boue de granulés et d'eau, comprenant un bâti cylindrique (12 ; 212 ; 412) avec une section de base (24 ; 224) et une section supérieure (30 ; 230) ayant chacune le même diamètre interne, une grille cylindrique (16 ; 216) montée généralement de manière verticale à l'intérieur dudit bâti, un rotor élévateur (14 ; 214) positionné généralement de manière verticale à l'intérieur de ladite grille, ledit rotor comportant un arbre (38 ; 236) supporté rotativement par un palier de support (44) sur ladite section supérieure, un moteur (18 ; 218) monté sur ladite section supérieure dudit bâti et relié de manière entraînable audit arbre de rotor, une arrivée de boue (20 ; 220) communiquant avec un intérieur de ladite grille adjacente à une partie inférieure de celui-ci, une sortie de granulés séchés (22 ; 222) communiquant avec l'intérieur de ladite grille (16 ; 216) adjacente à une extrémité supérieure de celui-ci, et une partie d'extrémité inférieure (50) dudit arbre de rotor (38 ; 236) étant guidée rotativement dans ladite section de base dudit bâti, **caractérisé en ce que** ladite grille cylindrique (16 ; 216) s'étend au moins partiellement vers le bas à l'intérieur de ladite section de base dudit bâti (12 ; 212) et **en ce que** ladite section supérieure (30 ; 230) est complètement séparable de ladite section de base (24 ; 224) pour le nettoyage et la maintenance à l'intérieur dudit bâti (12 ; 212 ; 412).

2. Dessiccateur selon la revendication 1, dans lequel ladite section de base (24 ; 224) dudit bâti (12 ; 212 ; 412) comporte un élément d'alignement (48 ; 248) recevant de manière guidable une partie d'extrémité inférieure dudit rotor (14 ; 214).

3. Dessiccateur selon la revendication 1, dans lequel ledit bâti (12 ; 212) est supporté sur une paroi supérieure (270) d'un réservoir (74 ; 274) et en communication avec le réservoir (74 ; 274) pour la décharge d'eau à partir de ladite grille (16 ; 216) et du bâti (12 ; 212) directement à l'intérieur du réservoir (74 ; 274).

4. Dessiccateur selon la revendication 1, comprenant par ailleurs un dispositif de levage (96 ; 296 ; 436) pour élever ladite section supérieure (30 ; 230) lorsqu'elle est séparée de ladite section de base (24 ; 224).

5. Dessiccateur selon la revendication 4, dans lequel ledit dispositif de levage (96 ; 296 ; 436) supporte ledit moteur (18 ; 218), ledit rotor (14 ; 214), ladite grille (16 ; 216), une plaque supérieure (26 ; 226 ; 434) et ladite section supérieure de bâti (30 ; 230) lorsque ladite section supérieure de bâti est séparée de ladite section de base de bâti (24 ; 224 ; 440) et élevée vers le haut par ledit dispositif de levage (96 ; 296 ; 436).

6. Dessiccateur selon la revendication 3, dans lequel ledit réservoir (74) comporte un laminoir à fond grillagé (83) recevant de l'eau à partir dudit bâti (12) pour séparer les particules solides entraînées dans ladite eau, ledit laminoir (83) étant monté de manière coulissante dans une zone supérieure dudit réservoir (74) pour permettre l'évacuation des particules solides à partir du laminoir (83).

7. Dessiccateur selon la revendication 2, dans lequel ladite extrémité inférieure dudit rotor (14 ; 214) comporte une extension axiale (50 ; 250) engagée rotativement avec ledit élément d'alignement (48 ; 248), ledit élément d'alignement (48 ; 248) étant fixé en rapport concentrique à la grille (16 ; 216) et à ladite section de base (24 ; 224) du bâti (12 ; 212) et étant lubrifié et refroidi par l'eau évacuée à partir de ladite boue.

8. Dessiccateur selon la revendication 1, dans lequel ladite section de base (24 ; 224) communique avec un réservoir (74 ; 274) destiné à recevoir l'humidité passant à travers la grille (16 ; 216), à travers la section de base (24 ; 224) et à l'intérieur du réservoir (74 ; 274).

9. Dessiccateur selon la revendication 8, dans lequel ledit bâti (12) comporte des éléments supérieurs (52) et inférieurs (60) en alignement avec et supportant l'engrènement avec les extrémités supérieure et inférieure de ladite grille (16), les extrémités de ladite grille (16) et lesdits éléments (52, 60) comportant un rapport d'action conjointe où l'humidité passant à travers la grille (16) circulera vers le bas à l'extérieur de l'élément inférieur pour le passage à l'intérieur dudit réservoir (74).

10. Dessiccateur selon la revendication 9, dans lequel ledit élément inférieur comporte plusieurs barres divergeant vers le haut (63) guidant une extrémité inférieure de la grille (16) dans un rapport d'action conjointe avec une extrémité supérieure dudit élément inférieur (60).

11. Dessiccateur selon la revendication 9, dans lequel une extrémité supérieure de ladite grille et dudit élément supérieur (52) ayant une structure de support agissant conjointement (120, 122) pour supporter de manière détachable ladite grille à partir dudit élément supérieur.

12. Dessiccateur selon la revendication 11, dans lequel ladite grille (16) comporte une paire de crochets (120) sur une extrémité supérieure, ledit élément supérieur comportant une paire de broches de projection (122) supportant de manière détachable lesdits crochets et la grille.

13. Dessiccateur selon la revendication 12, dans lequel lesdits crochets (120) s'ouvrent en périphérie de ladite grille pour permettre à la grille d'être assemblée sur et séparée dudit élément supérieur par rotation partielle de la grille.

14. Dessiccateur selon la revendication 8, dans lequel ledit réservoir (274) comporte une grille (272) au-dessous de ladite section de base destinée à évacuer les fines de l'eau entrant dans le réservoir (274) à partir du bâti (212).

15. Dessiccateur selon la revendication 14, dans lequel ladite grille (272) dans ledit réservoir (274) est monté dans un cadre évacuable inséré à l'intérieur dudit réservoir (274).

16. Dessiccateur selon la revendication 14, dans lequel ladite grille (272) dans ledit réservoir (274) est inclinée et comporte une partie de bordure inférieure en repérage avec un orifice (306) dans une paroi dudit réservoir (274) pour décharger les fines à travers ledit orifice.

17. Dessiccateur selon la revendication 16, dans lequel un plateau récepteur de fines (316) est positionné à l'extérieur dudit réservoir (274) en association avec ledit orifice (306) pour recevoir des fines déchargées à travers ledit orifice (306).

18. Dessiccateur selon la revendication 8, dans lequel ledit réservoir comporte une partie supérieure mobile (269), ladite section de base (224) dudit bâti (214) étant montée sur ladite partie supérieure mobile (269) du réservoir (274).

19. Dessiccateur selon la revendication 18, dans lequel ladite partie mobile (269) de la partie supérieure du réservoir (274) est supportée de manière pivotante pour permettre à ladite section de base (224) d'être pivotée vers une position afin de permettre le nettoyage lorsque la section supérieure (230) dudit bâti (212) est élevée par un dispositif de levage (296).

20. Dessiccateur selon la revendication 1, comprenant par ailleurs un ventilateur d'air (446) monté dans ladite section supérieure dudit bâti (412), ledit ventilateur (446) étant entraîné par un moteur (422), ledit ventilateur (446) déplaçant l'air de séchage vers le haut à travers le bâti (412) pour la décharge à partir d'une partie supérieure du bâti (412).

21. Dessiccateur selon la revendication 4, dans lequel ledit dispositif de levage (96 ; 296) comporte un élément élévateur (102 ; 302) pivoté autour d'un axe vertical lorsque l'élément élévateur (102 ; 302) lève la section supérieure (30 ; 230) vers le haut, permettant alors au composant élevé de pivoter autour d'un axe vertical vers un position espacée latéralement de ladite section de base (24 ; 224) du bâti (12 ; 212) pour permettre l'évacuation de la grille (16 ; 216) et pour faciliter le nettoyage du dessiccateur.

22. Dessiccateur selon la revendication 21, dans lequel ledit dispositif de levage (96 ; 296) est un ressort à gaz.

23. Dessiccateur selon la revendication 21, dans lequel ledit dispositif de levage (436) est une presse de levage actionnée manuellement.

24. Dessiccateur selon la revendication 19, dans lequel une grille (272) dans ledit réservoir (274) comporte un laminoir à fond grillagé recevant de l'eau à partir dudit bâti (212) pour séparer les particules solides entraînées dans ladite eau, ledit laminoir étant monté de manière coulissante dans une zone supérieure dudit réservoir (274) pour permettre l'évacuation de particules solides à partir du laminoir.

25. Dessiccateur selon la revendication 5, dans lequel le dispositif de levage (96 ; 296 ; 436) lève ladite section supérieure (30 ; 230) du bâti (12 ; 212 ; 412), le rotor (14 ; 214) et la grille (16 ; 216) généralement de manière verticale vers le haut et s'éloignant hors de ladite section de base (24 ; 224 ; 440), ledit dispositif de levage (96, 296, 436) étant rotatif pour faire pivoter ladite section supérieure du bâti (12 ; 212 ; 412), le rotor (14 ; 214) et la grille (16 ; 216) hors de l'alignement vertical avec ladite section de base (24 ; 224 ; 440).

26. Dessiccateur selon la revendication 17, dans lequel ledit plateau récepteur de fines (310) comporte une grille de fond (320) pour séparer par ailleurs les fines de l'eau déchargée dans le réservoir.

27. Dessiccateur selon la revendication 26, dans lequel ledit plateau récepteur de fines (310) est supporté de manière amovible à partir dudit réservoir pour permettre l'évacuation des fines séparées à partir du réservoir.

28. Dessiccateur selon la revendication 8, dans lequel ledit réservoir (274) comporte un élément de grille (272) monté dans une zone supérieure dudit réservoir (274) pour recevoir de l'eau à partir dudit bâti (212) pour séparer les particules solides entraînées dans ladite eau.

29. Dessiccateur selon la revendication 28, dans lequel ladite grille (272) est inclinée pour décharger des fines de granulés à partir d'une bordure inférieure de celui-ci dans un plateau collecteur de fines (316) sous-jacent à ladite bordure inférieure de la grille (272), ledit plateau collecteur de fines (316) étant positionné à l'extérieur dudit réservoir.

30. Dessiccateur selon la revendication 29, dans lequel ledit plateau collecteur de fines (316) comporte une grille de fond (320) pour séparer par ailleurs les fines de l'eau déchargée à l'intérieur du réservoir (274).

31. Dessiccateur selon la revendication 30, dans lequel ledit plateau collecteur de fines (316) est supporté de manière amovible à partir dudit réservoir (274) pour permettre l'évacuation des fines séparées à partir du réservoir (274).

32. Dessiccateur selon la revendication 21, dans lequel ledit rotor (14 ; 214) et ladite grille (16 ; 216), ensemble avec ladite section supérieure de bâti (30 ; 230), sont tous supportés de manière amovible par ledit dispositif de levage (96 ; 296).

33. Dessiccateur selon la revendication 32, dans lequel ledit moteur (18 ; 218) est monté sur ladite section supérieure de bâti (30 ; 230) et alors supporté de manière amovible par ledit dispositif de levage (96 ; 296) ensemble avec ladite section supérieure de bâti.
